# EUROPEAN PATENT SPECIFICATION

(11) **EP 3 388 664 B1**
(45) Date of publication and mention of the grant of the patent: **22.06.2022**
(21) Application number: 17166078.0
(22) Date of filing: 11.04.2017
(51) Int. Cl.: B63B 21/50, B63B 1/10, F03D 13/25, B63B 35/44

(54) **BUOYANT STRUCTURE CARRYING WIND TURBINES**
SCHWIMMFÄHIGE STRUKTUR MIT WINDTURBINEN
STRUCTURE FLOTTANTE PORTANT DES ÉOLIENNES

(43) Date of publication of application: 17.10.2018
(73) Proprietor: XEMC Darwind BV, 1216 SE Hilversum (NL)
(72) Inventor: DE BOER, Gerlof Johannes, 1216 SE Hilversum (NL); PLANTEMA, Marco Rowdy, 3544 RH Utrecht (NL)
(74) Representative: De Vries & Metman

(56) References cited:
- WO-A1-2016/007076
- WO-A2-2011/065840
- DE-U1- 20 109 480
- FR-A1- 2 852 063
- US-A1- 2012 043 763
- US-A1- 2015 375 832

## Description

The present disclosure relates to a buoyant structure with a row of two or more wind turbines carried by the structure, the structure having a mooring section at a distance from the row of wind turbines. The invention also relates to a method of aligning such a structure with a wind direction, in particular when the wind direction deviates from the direction of surrounding water currents and waves.

An example of such a buoyant structure is disclosed in WO 2010/094776. Spacing the mooring section from the row of wind turbines results in weathervaning of the structure such that the wind turbines arrive in an upwind position, the row of wind turbines being essentially perpendicular to the wind direction. Since the turbines are not in each other's wake, they can be positioned closely together.

The direction of offshore water currents does not always coincide with the wind direction. As a result the wind turbines are not always optimally aligned with the wind direction. WO 2010/094776 teaches to solve this problem by yawing the wind turbines, e.g., over a limited yawing range, or to use thrusters for adjusting the position of the structure as a whole. The use of yawing mechanisms complicates the design and maintenance of the turbine. The use of thrusters would require substantial power, which would significantly reduce the overall efficiency of the wind power plant.

It is an object of the invention to provide a way to align the structure with the wind direction in case the wind direction does not coincide with the direction of ambient water currents, which does not require simultaneous yawing or the use of power consuming thrusters.

The object of the invention is achieved with a buoyant structure according to claim 1 or a method according to claim 7. For instance, the foremost wind turbine (viewed from wind direction) can be subjected to a higher wind load than the one or more other wind turbines, or the rearmost turbine (when viewed in wind direction) can be subjected to a reduced wind load. This creates a moment of force rotating the structure into the wind direction.

The wind alignment means may for example comprise a pitch mechanism. The wind load on one of the wind turbines can for example be adjusted by pitching the blade angle of the blades of the wind turbine, e.g., by means of a pitch drive under the control of a control unit. The blades of the wind turbine can be pitched simultaneously or individually. If the blades of one wind turbines have another pitch angle than the blades of the other wind turbine the wind force will be different for the two wind turbines and a moment will be created moving the buoyant structure relative to the wind direction.

Individual pitch control (IPC) provides dynamical and individual adjustment of the pitch of each blade and can be used to create a side load on the wind turbine. The blades can for example be provided with one or more load sensors, e.g., in the blade root to measure the bending moment in the plane of rotation of the blades. A feedback controller then modulates the pitch angle of each individual blade to control the effective total side load in such a manner that the side load counteracts the loads induces by currents and waves. For example, if the rotor has three or more blades, half of the time two of the three blades move downward. The lowest one of the two blades is then pitched to experience a bending moment counteracting to the bending moments exerted to the other two blades. This results in the desired net side load.

Optionally, the wind alignment means comprises a yaw drive for individual adjustment of the yaw position of one of the wind turbines. The wind turbine can individually be yawed, without simultaneously yawing the other wind turbine(s). Adjusting the yaw position can be used to adjust the wind load received by the wind turbine. For instance, the rearmost wind turbine (when viewed from wind direction) can wholly or partly be yawed out of the wind to reduce the exerted wind load, while the other wind turbine maintains its yaw position. This creates the required moment to rotate the structure towards the desired position. In the prior art it has been proposed to correct misalignment of a floating platform with a row of wind turbines by simultaneous yawing of the wind turbines. This reduces the efficiency of the turbines. By yawing only one wind turbine the yield of the other wind turbine can be optimized.

Repositioning the structure becomes easier if the distance between the mooring section and the row of wind turbines is adjustable. Reducing this distance reduces the required forces to rotate the structure against the forces induced by the water currents. The mooring section may for example comprise a rail guide guiding a shoe connected to a turret. This allows repositioning of the structure relative to the turret. Hydraulic spindles and/or driven gear wheels may for example be used to move the shoe along the rail guide.

Optionally the mooring section may be moved parallel to the row of wind turbines, e.g., to adjust the distance between the mooring section and a center line centrally crossing the row of wind turbines. This can be done with a similar rail guide as described above The offset distance may for example be adjustable. If the mooring section is closer to the rear most wind turbine (viewed in wind direction), the wind force exerted to the foremost wind turbine will create a larger moment of force than the wind force exerted onto the rearmost wind turbine, so the structure will be rotated into the wind direction.

Optionally, the structure comprise one or more length adjustable connections between the row of wind turbines and the mooring section. By adjusting the length, the distance between the row of turbines and the mooring section and/or the distance between the mooring section and the center line centrally crossing the row of wind turbines can be adjusted.

The structure may comprise one or more active or passive rudders and/or thrusters under the control of the control unit. This helps to reduce the required force for rotating and repositioning the structure.

A passive rudder could for example be a fixed structure extending upwind from the mooring section under water and arranged to move the wind turbines into the wind direction. More particularly, it can be a plate-like structure extending from the corner mooring section in a direction away from the wind turbines, substantially perpendicular to the planes of rotation of the wind turbines (if not yawed), dimensioned in such way that pressure exerted by sea currents and sea motion balances the pressure exerted to buoyant structure at the opposite side of the mooring section.

A suitable example of an active rudder would be an expandable body, e.g., a water-filled expandable body or balloon, which is filled or emptied under the control of a control unit so as to rotate the wind turbines into the wind direction.

Optionally, the structure may be provide with one or more sails arranged to align the structure with the wind direction.

Any passive or active rudders and/or sails or similar provisions are under the control of a control unit, programmed to control of the rudders and/or sails in response to signals from sensors sensing an angle between the wind direction and the rotor axes of the wind turbines. The orientation of the active rudders can be adjusted on basis of measured relative wind and current directions. The resulting change in lift and drag loads of the rudder cause a rotating moment which orients the buoyant structure into the wind direction.

Optionally, the disclosed provisions for aligning the wind turbines with the wind direction can be combined. For example, a control unit may be programmed to adjust the blade pitch angles and / or rotor yaw angles, while active and/or passive rudders or thrusters are used as an auxiliary support to force the turbines towards the wind direction.

In a specific embodiment, the wind alignment means comprise an auxiliary submersible section creating symmetry about the mooring section below water level. Such a section may for instance comprise a third corner completing a symmetrical configuration of corners, e.g., semi-submersible corner bodies, around the mooring section. Since the structure is symmetrical below water level the currents and the waves do not bias the structure towards any specific orientation, so the buoyant structure will automatically align the wind turbines with the wind direction by free weathervaning.

The buoyant structure may for example be a substantially triangular structure, e.g., comprising two corners carrying a wind turbine and a third corner comprising a mooring section. The corners may for example comprise semi-submersible bodies, such as columns, interconnected by connecting elements.

The disclosure also relates to a buoyant structure comprising at least two wind turbines, all of the wind turbines being positioned in a row, the buoyant structure further comprising a mooring section at a distance from the row of wind turbines, wherein the buoyant structure has a submersible part which is essentially symmetrical about the mooring section.

The buoyant structure may for example comprise three or more semisubmersible columns connected by connecting elements to form a polygonal, e.g. a triangular, e.g., an equilaterally triangular structure with the mooring section positioned centrally within the buoyant structure. In a particular embodiment, the buoyant structure is comprises three semi-submersible columns connected by connecting elements

The connecting elements in any one of the buoyant structures of the disclosure may for example comprise one or more beams, such as girders or trusses or the like. Optionally, a platform or similar elements may connect the connection elements, for example to enhance mechanical stiffness of the structure.

The wind turbines can for example be multi-megawatt wind turbines, e.g., of the gearless direct drive type.

The wind turbines can for example be equally sized. Alternatively one or more of the turbines may be differently sized. The wind turbines may rotate in the same direction or in opposite directions.

The above-described aspects will hereafter be more explained with reference to the accompanying drawings showing a number of exemplary embodiments.
Figure 1: shows in perspective view an exemplary embodiment of a buoyant structure carrying two wind turbines;
Figure 2: shows the structure in top view when the wind direction coincides with the direction of the water currents;
Figure 3: shows the structure in top view when the wind direction is misaligned with the direction of the water currents;
Figure 4: shows the structure with one turbine yawed to correct the position relative to the wind direction;
Figure 5: shows the structure in top view with an offset turret position;
Figure 6: shows in detail the mooring section of the structure in Figure 5;
Figure 7: shows a further alternative embodiment in top view;
Figure 8: shows in detail the mooring section of the structure of Figure 7;
Figure 9: shows a further alternative embodiment in top view;
Figure 10: shows a further alternative embodiment in top view;
Figure 11: shows a further alternative embodiment in top view;
Figure 12: shows a further alternative embodiment in perspective view.

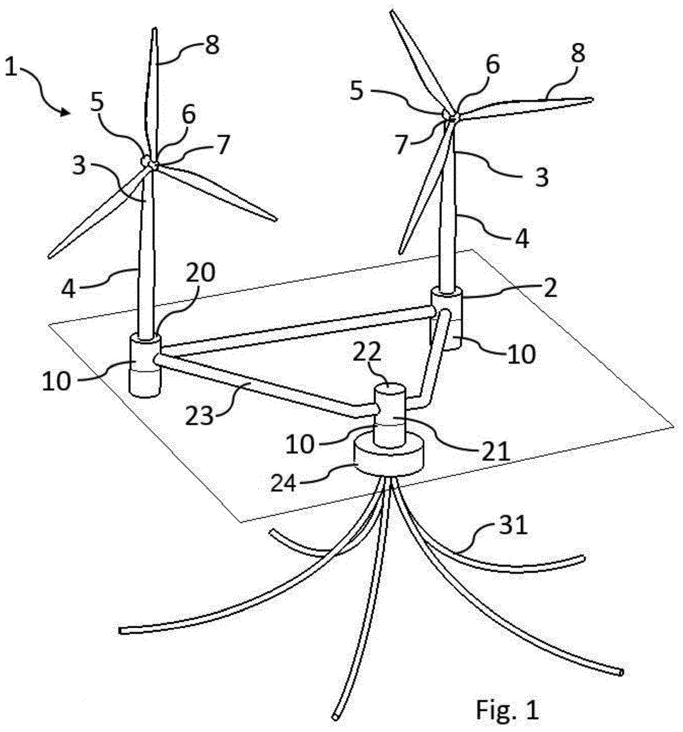

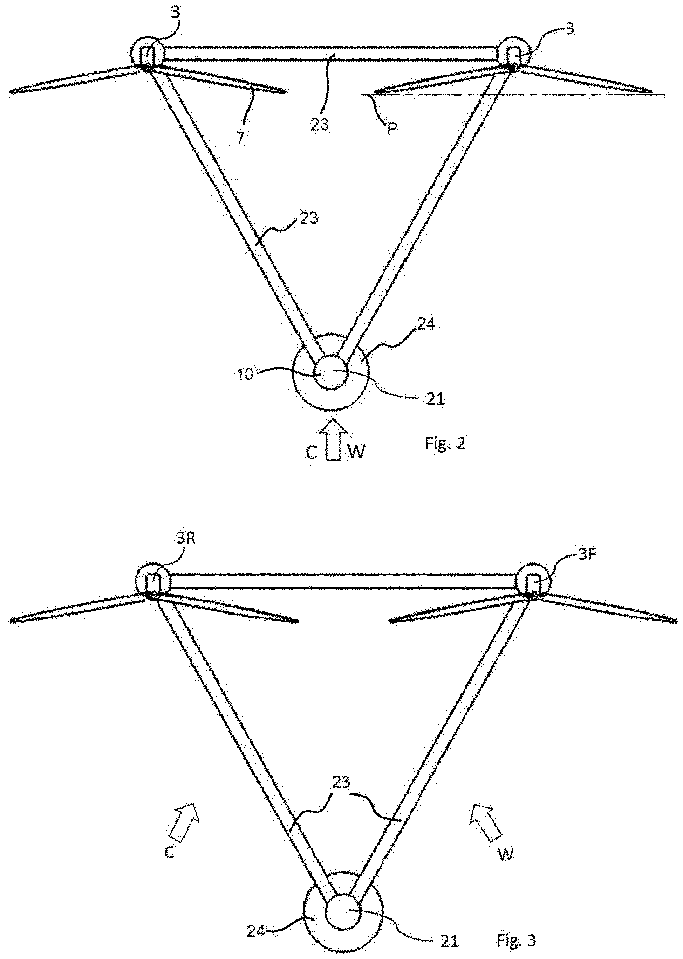

Figures 1 and 2 show a buoyant structure 1 carrying two wind turbines 3. The wind turbines 3 comprise a tower 4 carrying a gondola or nacelle 5 with a rotor 6 comprising a hub 7 carrying three rotor blades 8. Wind force impinging the rotor blades 7 induces rotation of the rotor 6 which is linked, e.g., gearless or via a gear transmission, to a generator located in the nacelle, converting the mechanical energy of the rotor into electrical energy, which is fed into a utility grid. The rotor blades 7 of each wind turbine 3 define a plane of rotation P (see Figure 2). These planes of rotation P of both wind turbines are within the same plane.

The buoyant structure 1 comprises three vertical columns 10 in a triangular arrangement. The three columns 10 form a triangle. The tops of the columns 10 form a deck 20. Two of these decks 20 carry a wind turbine 3. The deck 22 on the third corner 21 may carry shared facilities, such as a common converter or transformer used for both wind turbines and/or a shared helideck or the like. The third corner 21 also comprises a mooring section 24 with a turret for attaching mooring lines 31 anchoring the buoyant structure 1 to the sea bed. The buoyant structure 1 can rotate around the third corner 21. Wind force will orient the buoyant structure 1 with the wind turbines 3 to an upwind orientation. The three columns 10 are linked by connection elements 23, which can for example be beams, such as girders or trusses.

When the wind direction W coincides with the direction C of the water currents, the structure will weathervane and automatically align with the wind direction, as shown in Figure 2. This position - with the wind direction W being substantially perpendicular to the pale of rotation P - results in maximum efficiency of the wind turbines 3.

However, in many cases the wind direction W is different for the direction C of the water currents. As a result the wind turbines 3 will not end up in the optimally aligned position, as is shown in Figure 3. The row of wind turbines 3 is not perpendicular to the wind direction anymore. When viewed in wind direction W one of the wind turbines is the foremost turbine 3F, while the other one is the rearmost turbine 3R.

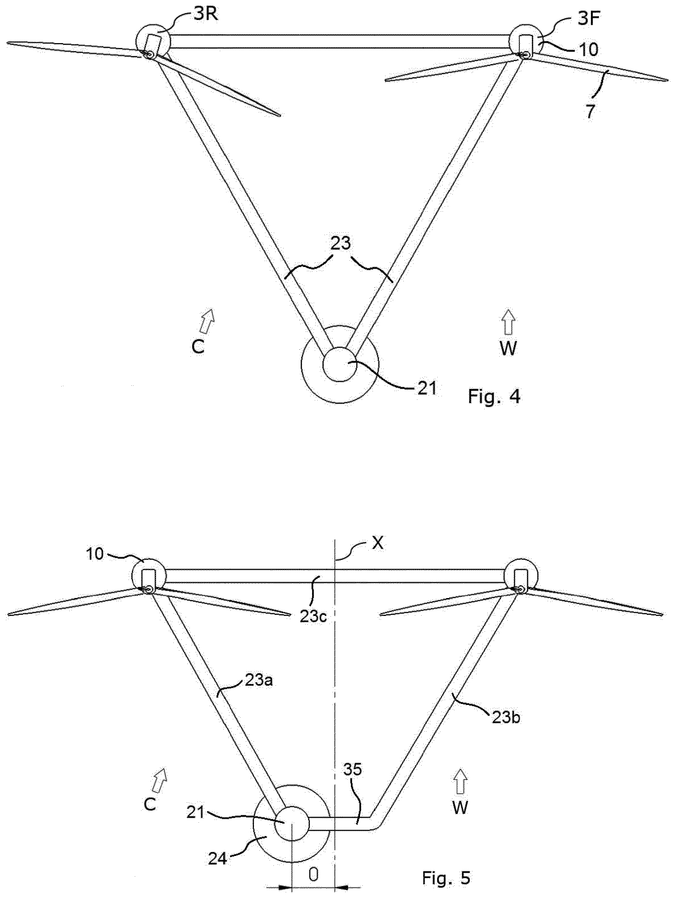

If the wind turbines 3F, 3R comprise a yaw mechanism, yawing can be used to optimize the position of the wind turbines relative to the wind direction. Starting from the situation in Figure 3, the foremost turbine 3F can be yawed into the wind direction W and catch more wind than the rearmost turbine 3R. As a result the structure will rotate towards the wind direction W (Figure 4). During rotation of the structure the foremost wind turbine 3F is yawed to maintain the turbine in an upwind position. The rearmost turbine 3R is yawed to maintain a slight off-wind position during rotation of the buoyant structure 1. This way the buoyant structure 1 can be maneuvered into a position optimizing the joint efficiency of the two turbines 3.

In Figure 5 the same effect is achieved by offsetting the corner 21 with the mooring section 24 from a centerline X perpendicularly crossing a central point of the row of the two wind turbines 3. The mooring section 24 comprises a guide 35 connected to the columns 10 carrying the wind turbines 3 by respective connection elements 23a, 23b. The corner 21 of the mooring section 24 is movable along the guide 35 which is substantially parallel to the connection element 23c connecting the two columns 10 carrying a wind turbine 3. As a result the wind force exerted to the foremost turbine 3F will create a larger moment of force than the wind force exerted onto the rearmost wind turbine 3R. The structure will rotate towards the wind direction W.

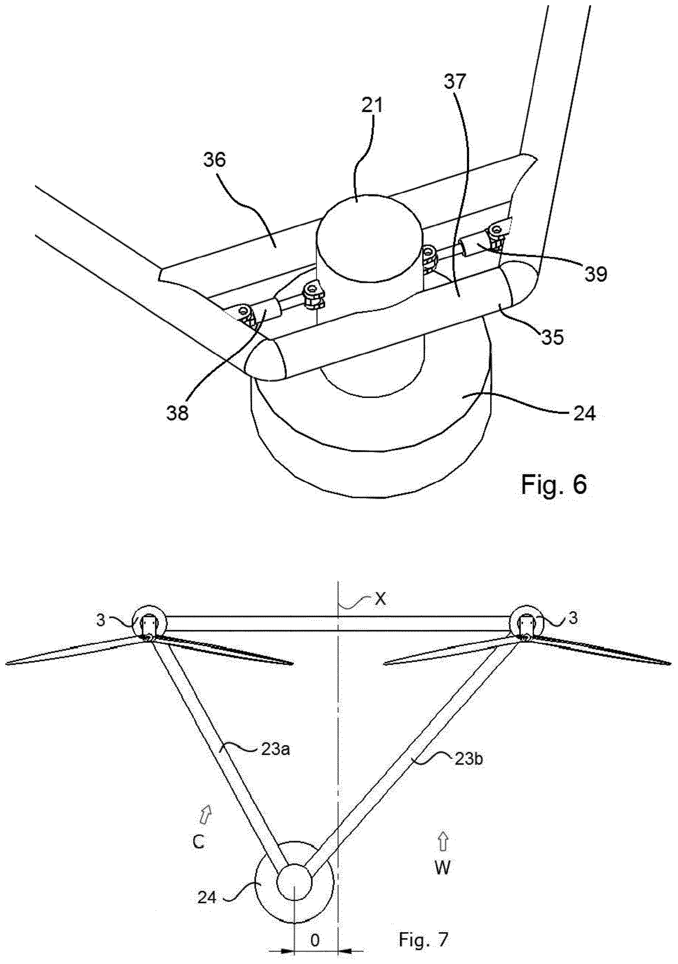

Figure 6 shows the mooring section 24 of Figure 5 in more detail. The column 21 of the mooring section 24 is guided between two parallel beams 36, 37. A couple of hydraulic cylinders 38, 39 is placed at opposite sides of the column 21 to draw the column 10 of the mooring section 24 along the guiding beams 36, 37. Alternatively, the column 21 of the mooring section 24 can be movable by means of chains or spindles or the like.

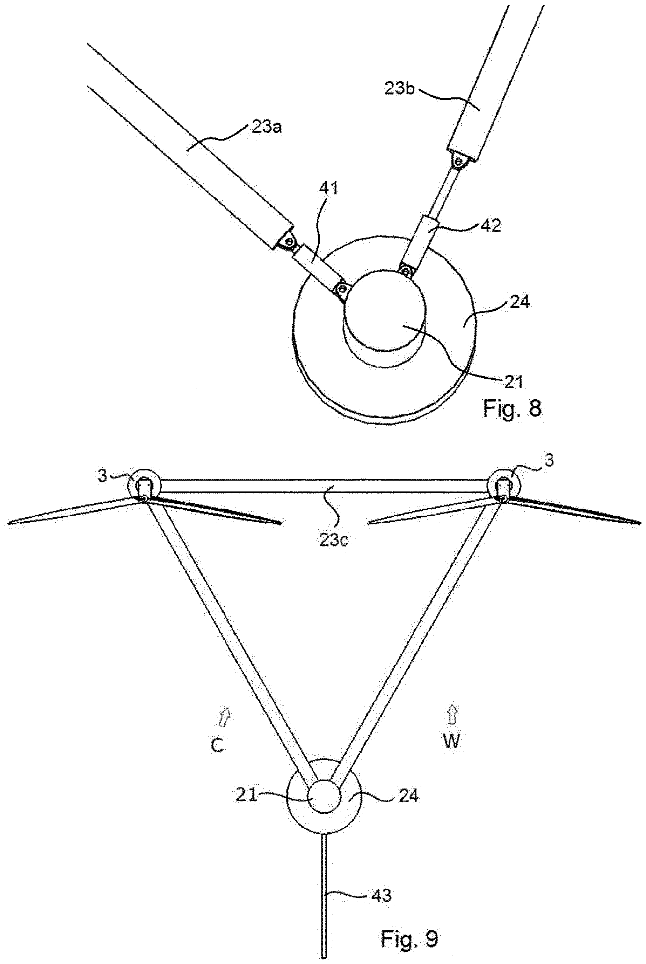

In an alternative embodiment, shown in Figure 7 again in top view, the mooring section 24 can be repositioned relative to the wind turbines 3 by changing the lengths of the connection elements 23a, 23b. In Figure 7, the left connection element 23a is shortened and the right connection element 23b is expanded by the same distance. This results in an eccentric positioning of the mooring section 24 relative to the row of wind turbines 3 and, consequently, in a rotating moment aligning the wind turbines with the wind direction W. This can for example be achieved using hydraulic cylinders 41, 42 to connect the column 21 of the mooring section 24 to the respective connection elements 23a, b (Figure 8). Alternatively, the same effect can be achieved using other means, such as for example spindles or the like.

Figure 9 shows an alternative embodiment of a buoyant structure comprising a passive rudder 43, formed by a flat plate extending from the column 21 of the mooring section 24 away from the wind turbines 3 in a direction essentially perpendicular to the connection element 23c between the two wind turbines 3. The passive rudder 43 is a fixed plate mainly or completely under water. The surface area of the rudder is such that any pressure exerted to it by sea motion (i.e., waves and currents) is balanced by sea motion induced pressure exerted to the buoyant structure at the opposite side of the mooring section.

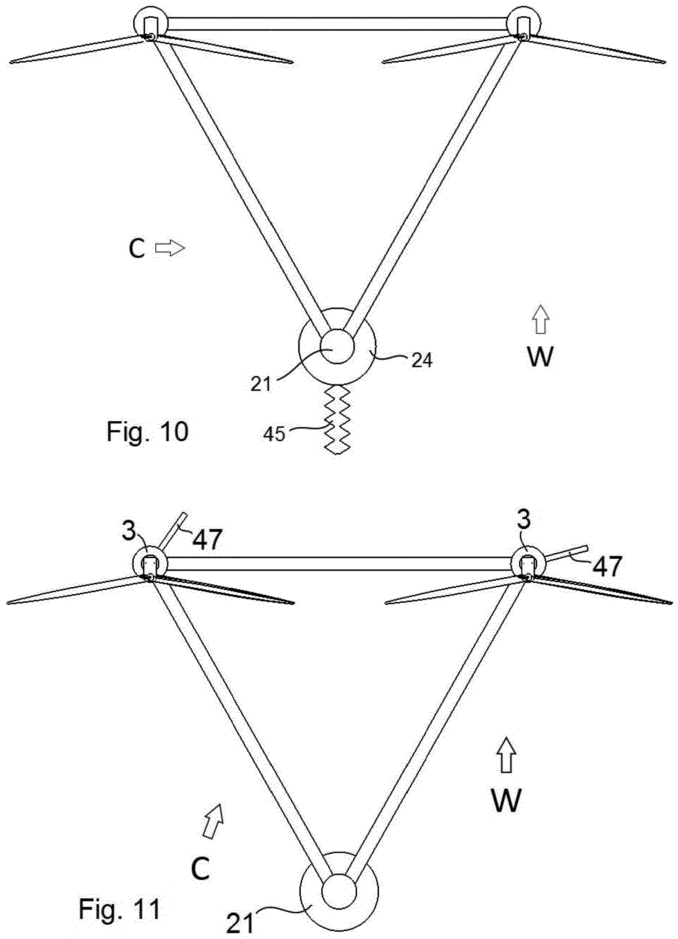

Figure 10 shows a further embodiment of a buoyant structure 1 comprising an expandable rudder 45, e.g., an inflatable rudder. The rudder 45 can for example be a balloon-like structure or a large bellows or a telescopically extendible rudder. When sensors (not shown) detect a difference between the wind direction and the orientation of the buoyant structure 1 (and/or a difference between the wind direction and the sea current direction), a control unit (not shown) will expand the rudder 45, e.g., proportionally to the detected difference. If expanded the rudder 45 will function in the same way as the passive rudder 43 of Figure 9.

Instead of having one rudder connected to the column 21 of the mooring section 24, use can be made of a pair of rudders 47 both being connected to a column carrying one of the wind turbines 3, such as is shown in Figure 11. The rudders 47 in Figure 11 are active rudders, which means that the orientation of the rudders 47 can actively be adjusted by a control unit in dependence of the difference between wind direction W and the direction of the sea currents C.

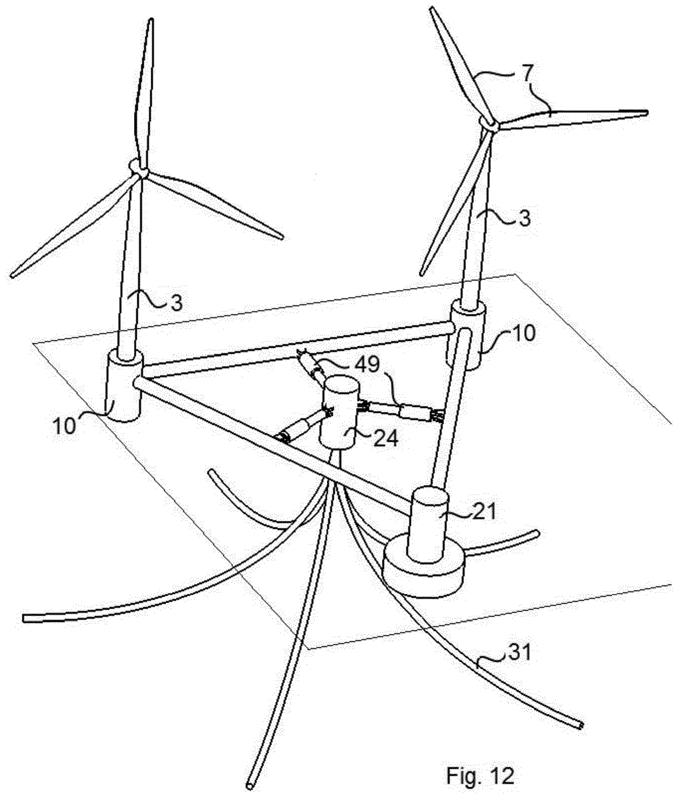

An alternative arrangement is shown in Figure 12. The buoyant structure 1 in Figure 12 is triangular and has three semi-submersible columns 10 connected by connecting elements 23 to form an equilaterally triangular structure. A mooring section 24 is arranged centrally within the triangular structure. The mooring section 24 is connected to each one of the connecting elements 23 by means of a hydraulic cylinder 49 or a similar extendible connecting element. Two of the three semi-submersible columns 10 carry a wind turbine 3. The third semi-submersible column 21 creates symmetry about the mooring section 24 below water level and, in that respect, forms a wind alignment means using forces exerted by the sea currents to generate a side load onto the buoyant structure 1 to compensate for misalignment with the wind direction W.

Below water level the structure is symmetrical relative to the mooring section 24, so the direction of the waves and sea currents hardly affects the position and orientation of the buoyant structure 1. Above water level, the configuration is asymmetrical with the wind turbines 3 being positioned at only one side of the mooring section 24, so the buoyant structure 3 will weathervane and the wind turbines 3 will automatically be aligned with the wind direction W without disturbance by a possibly deviating direction of the waves or sea currents. The three hydraulic cylinders 49 can be used for slightly changing the position of the mooring section within the structure so as to correct minor misalignments relative to the wind direction.

It is noted that the drawings are schematic, not necessarily to scale and that details that are not required for understanding the present invention may have been omitted. The terms "upward", "downward", "below", "above", and the like relate to the embodiments as oriented in the drawings, unless otherwise specified. Further, elements that are at least substantially identical or that perform an at least substantially identical function are denoted by the same numeral, where helpful individualised with alphabetic suffixes.

Elements and aspects discussed for or in relation with a particular embodiment may be suitably combined with elements and aspects of other embodiments, unless explicitly stated otherwise.

## Claims

1. A buoyant structure (1) comprising:
- at least two wind turbines (3), all wind turbines being positioned in a single row;
- a mooring section (24) at a distance from the row of wind turbines; and
- wind alignment means for converting ambient forces to generate a moment of force at least partly compensating for misalignment with a wind direction and rotating the buoyant structure into the wind direction, while at least one of the wind turbines is maintained in a position with its rotor axis substantially perpendicular to the row, wherein the wind alignment means comprises:
- a pitch drive for adjustment of the pitch angle of one or more blades of one of the wind turbines, the pitch drive being under control of a pitch control unit programmed to pitch the blades such that the individual wind turbines encounter different wind loads resulting a moment of force at least partly compensating for misalignment with a wind direction; and/or
- a yaw drive of at least one of the wind turbines and a yaw control unit programmed to control the yaw drive while at least one of the other wind turbines is maintained in a position with its rotor axis substantially perpendicular to the row; and/or
- a guiding mechanism (35-39; 41,42) for adjusting the position of the mooring section relative to the row of wind turbines, e.g., in a direction parallel to the row and/or in a direction perpendicular to the row.

2. The structure of claim 1, comprising said pitch drive, wherein the control unit is programmed for individual blade pitching with at least one of the wind turbines, so as to generate a net side load onto the wind turbine.

3. The structure of any preceding claim, wherein the wind alignment means comprise an auxiliary submersible section (21) creating symmetry about the mooring section below water level.

4. The structure of any preceding claim, wherein the wind alignment means comprise one or more rudders (43,45,47) and/or sails.

5. The structure of claim 4, wherein the one or more rudders are expandable, e.g., telescopically and/or in an inflatable manner.

6. The structure of any preceding claim, additionally comprising one or more thrusters.

7. A method of bringing a buoyant structure (1) according to any one of the preceding claims into alignment with a wind direction, wherein at least one of the wind turbines is subjected to a different wind load than the one or more other wind turbines, so as to create a rotational moment at least partly compensating for a rotational moment caused by water currents and/or waves and to rotate the buoyant structure into the wind direction, while at least one of the wind turbines is maintained in a position with its rotor axis substantially perpendicular to the row, wherein
- a pitch angle of at least one of the blades of at least one wind turbine is changed to rotate the structure towards the wind direction and/or
- a yaw position of at least one wind turbine is changed to rotate the structure towards the wind direction, while at least one of the wind turbines is maintained in a position with its rotor axis substantially perpendicular to the row.

8. The method of claim 7, wherein the distance between the mooring section and the row of wind turbines is adjusted, and/or the distance between the mooring section and a center line centrally crossing the row of wind turbines is adjusted.

9. The method of claim 7 or 8, wherein one or more rudders (43,45,47) and/or one or more sails are used to create the rotational moment at least partly compensating for a rotational moment caused by water currents and/or waves.

## Patentansprüche

1. Schwimmfähige Struktur (1), die aufweist:
- wenigstens zwei Windturbinen (3), wobei alle Windturbinen in einer einzelnen Reihe positioniert sind;
- einen Verankerungsabschnitt (24) in einem Abstand von der Reihe von Windturbinen; und
- eine Windausrichtungseinrichtung zum Umwandeln von Umgebungskräften, um ein Kraftmoment zu erzeugen, das eine Fehlausrichtung mit einer Windrichtung wenigstens teilweise kompensiert und die schwimmfähige Struktur in die Windrichtung dreht, während wenigstens eine der Windturbinen in einer Position gehalten wird, in der ihre Rotorachse im Wesentlichen senkrecht zu der Reihe ist, wobei die Windausrichtungseinrichtung aufweist:
- einen Pitch-Antrieb zur Einstellung des Pitch-Winkels eines oder mehrerer Flügel einer der Windturbinen, wobei der Pitch-Antrieb unter der Steuerung einer Pitch-Steuereinheit erfolgt, die programmiert ist, um die Flügel derart zu kippen, dass die einzelnen Windturbinen auf unterschiedliche Windlasten treffen, was ein Kraftmoment ergibt, das die Fehlausrichtung mit einer Windrichtung wenigstens teilweise kompensiert; und/oder
- einen Gierantrieb wenigstens einer der Windturbinen und eine Giersteuereinheit, die programmiert ist, um den Gierantrieb zu steuern, während wenigstens eine der anderen Windturbinen in einer Position gehalten wird, in der ihre Rotorachse im Wesentlichen senkrecht zu der Reihe ist; und/oder
- einen Führungsmechanismus (35 - 39; 41, 42) zum Einstellen der Position des Verankerungsabschnitts relativ zu der Reihe von Windturbinen, z. B. in einer Richtung parallel zu der Reihe und/oder in einer Richtung senkrecht zu der Reihe.

2. Struktur nach Anspruch 1, die den Pitch-Antrieb aufweist, wobei die Steuereinheit für einzelnes Flügelkippen bei wenigstens einer der Windturbinen programmiert ist, um eine Nettoseitenlast auf der Windturbine zu erzeugen.

3. Struktur nach jedem vorangehenden Anspruch, wobei die Windausrichtungseinrichtungen einen tauchfähigen Hilfsabschnitt (21) aufweisen, der unter dem Wasserpegel eine Symmetrie um den Verankerungsabschnitt erzeugt.

4. Struktur nach jedem vorangehenden Anspruch, wobei die Windausrichtungseinrichtungen ein oder mehrere Ruder (43, 45, 47) und/oder Segel aufweisen.

5. Struktur nach Anspruch 4, wobei das eine oder die mehreren Ruder z.B. teleskopisch und/oder in einer aufblasbaren Weise ausdehnbar sind.

6. Struktur nach jedem vorangehenden Anspruch, die zusätzlich ein oder mehrere Schuberzeuger aufweist.

7. Verfahren, um eine schwimmfähige Struktur (1) nach einem der vorhergehenden Ansprüche in Ausrichtung mit einer Windrichtung zu bringen, wobei wenigstens eine der Windturbinen einer anderen Windlast als die eine oder mehreren anderen Windturbinen ausgesetzt wird, um ein Drehmoment zu erzeugen, das ein durch Wasserströme und/oder Wellen erzeugtes Drehmoment wenigstens teilweise kompensiert, und um die schwimmfähige Struktur in die Windrichtung zu drehen, während wenigstens eine der Windturbinen in einer Position gehalten wird, in der ihre Rotorachse im Wesentlichen senkrecht zu der Reihe ist, wobei
- ein Pitch-Winkel wenigstens eines der Flügel wenigstens einer Windturbine geändert wird, um die Struktur in Richtung der Windrichtung zu drehen, und/oder
- eine Gierposition wenigstens einer Windturbine geändert wird, um die Struktur in Richtung der Windrichtung zu drehen, während wenigstens eine der Windturbinen in einer Position gehalten wird, in der ihre Rotorachse im Wesentlichen senkrecht zu der Reihe ist.

8. Verfahren nach Anspruch 7, wobei der Abstand zwischen dem Verankerungsabschnitt und der Reihe von Windturbinen eingestellt wird und/oder der Abstand zwischen dem Verankerungsabschnitt und einer Mittellinie, welche die Reihe von Windturbinen mittig schneidet, eingestellt wird.

9. Verfahren nach Anspruch 7 oder 8, wobei ein oder mehrere Ruder (43, 45, 47) und/oder mehrere Segel verwendet werden, um das Drehmoment zu erzeugen, das ein durch Wasserströme und/oder Wellen erzeugtes Drehmoment wenigstens teilweise kompensiert.

## Revendications

1. Structure flottante (1) comprenant :
- au moins deux éoliennes (3), toutes les éoliennes étant positionnées dans une rangée unique ;
- une section d'amarrage (24) à une distance de la rangée d'éoliennes ; et
- des moyens d'alignement avec le vent pour convertir des forces ambiantes pour générer un moment de force compensant au moins partiellement un désalignement avec une direction du vent et pour tourner la structure flottante dans la direction du vent, pendant qu'au moins l'une des éoliennes est maintenue à une position avec son axe de rotor sensiblement perpendiculaire à la rangée, dans laquelle les moyens d'alignement avec le vent comprennent :
- un entraînement de pas pour un ajustement de l'angle de pas d'une ou plusieurs pales de l'une des éoliennes, l'entraînement de pas étant commandé par une unité de commande de pas programmée pour régler le pas des pales de sorte que les éoliennes individuelles soient soumises à des charges de vent différentes découlant d'un moment de force compensant au moins partiellement un désalignement avec une direction du vent ; et/ou
- un entraînement de lacet d'au moins l'une des éoliennes et une unité de commande de lacet programmée pour commander l'entraînement de lacet pendant qu'au moins l'une des autres éoliennes est maintenue à une position avec son axe de rotor sensiblement perpendiculaire à la rangée ; et/ou
- un mécanisme de guidage (35-39 ; 41, 42) pour ajuster la position de la section d'amarrage par rapport à la rangée d'éoliennes, par exemple dans une direction parallèle à la rangée et/ou dans une direction perpendiculaire à la rangée.

2. Structure selon la revendication 1, comprenant ledit entraînement de pas, dans laquelle l'unité de commande est programmée pour un réglage de pas de pale individuelle avec au moins l'une des éoliennes, de manière à générer une charge latérale nette sur l'éolienne.

3. Structure selon l'une quelconque des revendications précédentes, dans laquelle les moyens d'alignement avec le vent comprennent une section submersible auxiliaire (21) créant une symétrie par rapport à la section d'amarrage au-dessous du niveau de l'eau.

4. Structure selon l'une quelconque des revendications précédentes, dans laquelle les moyens d'alignement avec le vent comprennent un ou plusieurs gouvernails (43, 45, 47) et/ou une ou plusieurs voiles.

5. Structure selon la revendication 4, dans laquelle les un ou plusieurs gouvernails sont extensibles, par exemple de manière télescopique et/ou gonflable.

6. Structure selon l'une quelconque des revendications précédentes, comprenant en outre un ou plusieurs propulseurs.

7. Procédé pour aligner une structure flottante (1) selon l'une quelconque des revendications précédentes avec une direction du vent, dans lequel au moins l'une des éoliennes est soumise à une charge de vent différente de celle des une ou plusieurs autres éoliennes, de manière à créer un moment rotationnel compensant au moins partiellement un moment rotationnel provoqué par des courants d'eau et/ou des vagues et à tourner la structure flottante dans la direction du vent, pendant qu'au moins l'une des éoliennes est maintenue à une position avec son axe de rotor sensiblement perpendiculaire à la rangée, dans lequel
- un angle de pas d'au moins l'une des pales d'au moins une éolienne est changé pour tourner la structure vers la direction du vent et/ou
- une position de lacet d'au moins une éolienne est changée pour tourner la structure vers la direction du vent, pendant qu'au moins l'une des éoliennes est maintenue à une position avec son axe de rotor sensiblement perpendiculaire à la rangée.

8. Procédé selon la revendication 7, dans lequel la distance entre la section d'amarrage et la rangée d'éoliennes est ajustée, et/ou la distance entre la section d'amarrage et une ligne centrale croisant centralement la rangée d'éoliennes est ajustée.

9. Procédé selon la revendication 7 ou 8, dans lequel un ou plusieurs gouvernails (43, 45, 47) et/ou une ou plusieurs voiles sont utilisés pour créer le moment rotationnel compensant au moins partiellement un moment rotationnel provoqué par des courants d'eau et/ou des vagues.
